# EUROPÄISCHE PATENTANMELDUNG

(11) **EP 1 074 413 A2**
(43) Veröffentlichungstag der Anmeldung: **07.02.2001**
(21) Anmeldenummer: 00116692.5
(22) Anmeldetag: 02.08.2000
(51) Int. Cl.: B60J 7/00

(54) **Fahrzeugdach mit verstellbarem Verschlusselement**

(30) Priorität: 06.08.1999 DE 19937220
(71) Anmelder: Webasto Vehicle Systems International GmbH, 82131 Stockdorf (DE)
(72) Erfinder: Pätz, Werner, 86928 Hofstetten (DE); Ganz, Thomas, 82131 Stockdorf (DE); Teschner, Helmut, 86923 Finning (DE); Wecker, Reinhard, 82223 Eichenau (DE)
(74) Vertreter: Konnerth, Dieter Hans

(57) **Zusammenfassung**

Die Erfindung betrifft ein Fahrzeugdach mit einer von einem verstellbaren Verschlußelement (10), das ein elektronisches Element (12) aufweist, verschließbaren bzw. mindestens zum Teil freigebbaren Dachöffnung, einem verstellbaren Himmelteil (20) zum Verdecken des Verschlußelements sowie mindestens einem Koppelelement (18), das als Mitnehmer wirkt, um das Himmelteil bei der Verstellbewegung des Verschlußelements mitzunehmen. Das Koppelelement sorgt ferner für einen elektrischen Kontakt zwischen dem elektrischen Element des Verschlußelements und einem Kontaktelement (32), das an dem Himmelteil vorgesehen ist, um einen elektronischen Kontakt zwischen dem elektrischen Element des Verschlußelements und einem fahrzeugfesten elektrischen Element herzustellen.

## Beschreibung

Die vorliegende Erfindung betrifft ein Fahrzeugdach mit einer von einem verstellbaren Verschlußelement, das ein elektrisches Element aufweist, verschließbaren bzw. mindestens zum Teil freigebbaren Dachöffnung und einem daran gekoppelten verstellbaren Himmelelement zum Verdecken des Verschlußelements.

Aus DE 38 30 484 A1 ist ein Fahrzeugschiebedach bekannt, bei welchem ein mit Solarzellen versehener, in einer Führungsschiene in Dachlängsrichtung verschiebbarer Schiebedeckel mit Schleifkontakten versehen ist, die in elektrischem Kontakt mit einer dachfesten Kontaktschiene stehen, um für eine elektrische Verbindung zwischen den Solarzellen des Schiebedeckels und der Fahrzeugbatterie zu sorgen.

Aus DE 40 09 871 C2 ist ein Fahrzeugdach mit einem ausstellbaren Deckel bekannt, wobei unterhalb des Deckels ein Schiebehimmel vorgesehen ist, der unabhängig von dem Deckel in Dachlängsrichtung verschiebbar ist und mit einem oder mehreren elektrischen Lüftern versehen ist. Der Deckel ist mit einem Solargenerator und mit einer vorderen und einer hinteren Kontaktöffnung versehen, in welche entsprechende an dem Schiebehimmel ausgebildete Kontaktstifte für die Lüfter in den Himmel eingehängt werden können, um die Lüfter des Schiebehimmels mit Solarstrom aus dem Deckel zu versorgen.

Aus DE 35 32 083 C2 ist ein Fahrzeugdach mit einem verschiebbaren und ausstellbaren nichttransparenten Deckel bekannt, an dessen Unterseite ein nicht-transparentes Himmelteil mittels einer Koppelanordnung so angebracht ist, daß das Himmelteil bei der Verstellbewegung des Deckels mitgenommen wird. Die Koppelanordnung umfaßt zwei Paare aus je einem deckelfesten Mitnehmerbolzen und einem himmelfesten Mitnehmerrastteil. Bei der Montage des Deckels wird das Himmelteil mittels der Koppelanordnung mit dem Deckel verrastet. Das Mitnehmerrastteil ist in gewissem Maß schwenkbar ausgebildet, um die Höhenjustierung zu erleichtern und eine gewisse Relativbewegung zwischen Deckel und Himmelteil beim Verstellen des Deckels zu erlauben.

Es ist Aufgabe der vorliegenden Erfindung, ein Fahrzeugdach mit einem verstellbaren Verschlußelement, das ein elektrisches Element aufweist, und einem von dem Verschlußelement bei der Verstellbewegung über ein Koppelelement mitgenommenen Himmelteil zu schaffen, bei welchem auf einfache Weise für einen elektrischen Kontakt zwischen dem elektrischen Element des Verschlußelements und einem fahrzeugfesten elektrischen Element hergestellt wird.

Diese Aufgabe wird erfindungsgemäß durch ein Fahrzeugdach gelöst, wie es in Anspruch 1 definiert ist.

Bei dieser erfindungsgemäßen Lösung ist vorteilhaft, daß bei der Montage des Himmelteils der elektrische Kontakt zwischen dem elektrischen Element des Verschlußelements und dem Kontaktelement an dem Himmelteil selbsttätig hergestellt wird.

Bei dem elektrischen Element des Verschlußelements handelt es sich vorzugsweise um einen Solargenerator, während das fahrzeugfeste elektrische Element vorzugsweise die Fahrzeugbatterie oder ein Lüfter ist. Das Verschlußelement ist vorzugsweise als nichttransparenter Deckel ausgebildet, der in Dachlängsrichtung verschiebbar und mit seiner Hinterkante ausstellbar ist.

Das Koppelelement ist vorzugsweise als Verrastung ausgebildet und umfaßt vorzugsweise zwei Paare aus je einem Mitnehmerbolzen und einem Mitnehmerrastteil. Jedes Paar ist dabei nahe einem der beiden seitlichen Ränder des Verschlußelements in der Nähe des vorderen Endes des Verschlußelements, d.h. in der Nähe des Drehpunkts des Deckels bei der Ausstellbewegung, angeordnet, um die Relativbewegung zwischen dem Mitnehmerbolzen und dem entsprechenden Mitnehmerrastteil gering zu halten.

Der elektrische Kontakt des Koppelelements wird vorzugsweise durch je eine Kontaktfläche an jedem Mitnehmerbolzen und eine im verrasteten Zustand des Koppelelements damit in Eingriff stehende Kontaktfläche an dem Mitnehmerrastteil gebildet. Jeder Pol des elektrischen Elements des Verschlußelements ist über ein Kabel mit der Kontaktfläche eines der beiden Mitnehmerbolzen verbunden, wobei die Kontaktfläche jedes Mitnehmerrastteils über ein Kabel mit je einem himmelteilfesten Schleifkontakt in Verbindung steht, der in elektrischem Kontakt entlang einer dachfesten Schleifschiene verschiebbar ist, die mit je einem Pol des fahrzeugfesten elektrischen Elements in elektrischer Verbindung steht.

Im folgenden wird eine Ausführungsform der Erfindung anhand der beiliegenden Zeichnungen beispielhaft näher erläutert. Dabei zeigen:
- Fig. 1: einen Längsschnitt durch den vorderen Bereich des Deckels und des Himmelteils eines erfindungsgemäßen Fahrzeugdachs; und
- Fig. 2: eine Ansicht von oben auf den vorderen Bereich des Himmelteils von Fig. 1.

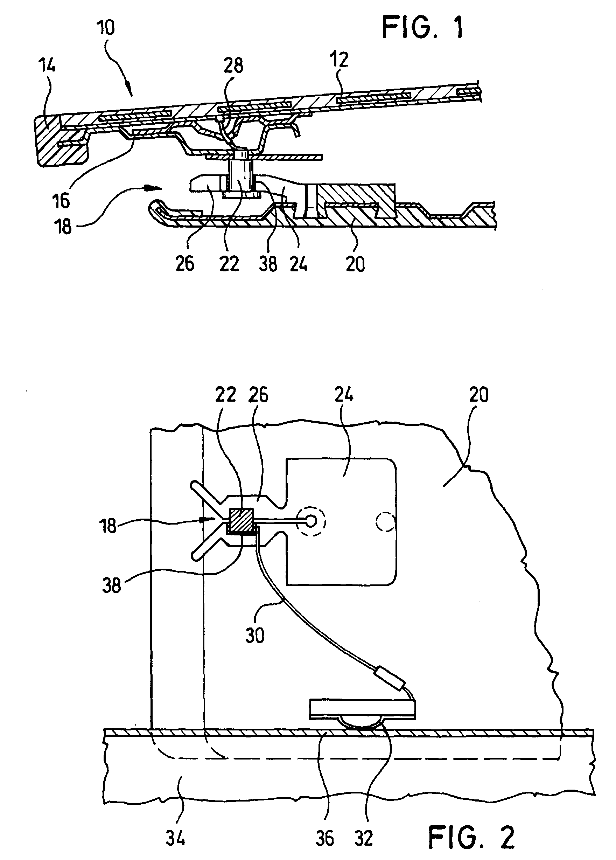

Gemäß Fig. 1 und 2 weist ein Deckel 10 an seiner Oberseite einen Solargenerator 12 auf. Der opake Deckel 10 eines Schiebehebedachs ist vorgesehen, um eine Dachöffnung in einer festen Dachhaut zu verschließen bzw. wahlweise freizugeben und ist zu diesem Zweck in Dachlängsrichtung verschiebbar und mit seiner Hinterkante ausstellbar an einem dachfesten Rahmen gelagert. Der Deckel 10 ist in seinem Umfangsbereich mit einer Umschäumung 14 umschäumt, mittels welcher ein Deckelinnenblech 16 an der Unterseite im Randbereich des Deckels befestigt ist. Der Deckel 10 ist allgemein nicht-transparent ausgebildet. Nahe des Drehpunkts des Deckels 10 bei der Ausstellbewegung ist nahe eines jeden der beiden seitlichen Ränder des Deckels 10 in der Nähe des vorderen Endes des Deckels 10 ein Koppelelement 18 vorgesehen, um den Deckel 10 mit einem Himmelteil bzw. Schiebehimmel 20 für eine Mitnahmebewegung zu koppeln. Jedes Koppelelement 18 ist als Verrastung ausgebildet und umfaßt je einen Mitnehmerbolzen 22, der an dem Deckelinnenblech 16 befestigt ist und über ein Kabel 28 elektrisch mit dem Solargenerator 12 verbunden ist, sowie ein Mitnehmerrastteil bzw. einen Himmeltransporthaken 24, der an dem Schiebehimmel 20 befestigt ist. Der Himmeltransporthaken 24 weist ein gegabeltes vorderes Ende 26 mit einer entsprechenden Ausnehmung für den Mitnehmerbolzen 22 auf und besteht aus elastischem Material, vorzugsweise Kunststoff.

Der Mitnehmerbolzen 22 ist auf seiner Außenseite mit einem Kontaktblech versehen, das über ein Kabel mit einem Pol des Solargenerators 12 verbunden ist. Die Ausnehmung für den Mitnehmerbolzen 22 in dem vorderen Ende 26 des Himmeltransporthakens 24 ist ebenfalls mit einem Kontaktblech 38 versehen, das über ein Kabel 30 mit einem an dem seitlichen Randbereich des Schiebehimmels 20 befestigten Kontaktfederblech 32 verbunden ist. Der Deckel 10 ist seitlich in einer dachfesten Führungsschiene 34 geführt, die auch eine Schleifschiene 36 aufweist, bezüglich welcher das Kontaktfederblech 32 als Schleifkontakt wirkt, der in elektrischem Kontakt entlang der Schleifschiene 36 in Dachlängsrichtung verschiebbar ist. Die Schleifschiene 36 steht in elektrischer Verbindung mit einem Pol eines fahrzeugfesten elektrischen Verbrauchers, wie beispielsweise einem elektrischen Lüfter oder der Fahrzeugbatterie.

Bei der Montage des Schiebehimmels 20 an dem Deckel 10 wird der Mitnehmerbolzen 22 jeweils in der entsprechenden Ausnehmung des Himmeltransporthakens 24 verrastet, wobei die Kontaktbleche des Mitnehmerbolzens 22 und des Himmeltransporthakens 24 in elektrischen Kontakt miteinander kommen und somit den jeweiligen Pol des Solargenerators 12 mit dem entsprechenden Schleifkontakt 32 elektrisch verbinden. Dadurch kann die von dem Solargenerator 12 erzeugte elektrische Leistung über die beiden Schleifschienen 36 dem fahrzeugfesten elektrischen Verbraucher unabhängig von der Stellung des Deckels 10 zugeführt werden.

Mittels der Verrastung wirken die Koppelelemente 18 als Mitnehmer, um den Schiebehimmel 20 bei der Verstellbewegung des Deckels 10 mitzunehmen. Zugleich dienen die Koppelelemente 18 jedoch auch als elektrische Kontaktelemente zwischen dem Deckel 10 und dem Schiebehimmel 20.

Bei der beschriebenen Ausführungsform ist vorteilhaft, daß ohne das störende Mitschieppen von Kabeln während aller Deckelpositionen ein elektrischer Kontakt zwischen dem Solargenerator 12 und dem fahrzeugfesten elektrischen Verbraucher möglich ist. Bei der Montage des Schiebehimmels 20 werden die Kontaktbleche des Mitnehmerbolzens 22 und des Himmeltransporthakens 24 automatisch in Eingriff gebracht. Aufgrund der Anordnung der Koppelelemente 18 in der Nähe des Drehpunkts des Deckels 10 bei der Ausstellbewegung ist die Relativbewegung der einzelnen Teile zueinander gering. Eine Ausgleichsbewegung der Kontaktteile ist nicht erforderlich.

### Bezugszeichenliste

- Deckel: **10**
- Solargenerator: **12**
- Umschäumung: **14**
- Deckelinnenblech: **16**
- Koppelelement: **18**
- Schiebehimmel: **20**
- Mitnehmerbolzen: **22**
- Himmeltransporthaken: **24**
- vorderer Teil von 24: **26**
- Kabel: **28, 30**
- Schleifkontakt: **32**
- Führungsschiene: **34**
- Schleifschiene: **36**
- Kontaktblech von 24: **38**

## Patentansprüche

1. Fahrzeugdach mit einer von einem verstellbaren Verschlußelement (10), das ein elektrisches Element (12) aufweist, verschließbaren bzw. mindestens zum Teil freigebbaren Dachöffnung, einem verstellbaren Himmelteil (20) zum Verdecken des Verschlußelements sowie mindestens einem Koppelelement (18), das als Mitnehmer wirkt, um das Himmelteil bei der Verstellbewegung des Verschlußelements mitzunehmen, und ferner für einen elektrischen Kontakt zwischen dem elektrischen Element des Verschlußelements und einem Kontaktelement (32) sorgt, das an dem Himmelteil vorgesehen ist, um einen elektrischen Kontakt zwischen dem elektrischen Element des Verschlußelements und einem fahrzeugfesten elektrischen Element herzustellen.

2. Fahrzeugdach nach Anspruch 1, **dadurch gekennzeichnet,** daß das elektrische Element (12) des Verschlußelements (10) ein Solargenerator ist.

3. Fahrzeugdach nach Anspruch 2, **dadurch gekennzeichnet,** daß das fahrzeugfeste elektrische Element die Fahrzeugbatterie oder ein Lüfter ist.

4. Fahrzeugdach nach Anspruch 2 oder 3, **dadurch gekennzeichnet,** daß das Verschlußelement (10) als nichttransparenter Deckel ausgebildet ist.

5. Fahrzeugdach nach Anspruch 4, **dadurch gekennzeichnet,** daß der Deckel (10) in Dachlängsrichtung verschiebbar ist.

6. Fahrzeugdach nach Anspruch 5, **dadurch gekennzeichnet,** daß der Deckel (10) ausstellbar und nach hinten verschiebbar ausgebildet ist.

7. Fahrzeugdach nach einem der vorhergehenden Ansprüche, **dadurch gekennzeichnet,** daß das mindestens ein Koppelelement (18) als Verrastung ausgebildet ist.

8. Fahrzeugdach nach Anspruch 7, **dadurch gekennzeichnet,** daß zwei Koppelelemente (18) aus je einem Mitnehmerbolzen (22) und einem Mitnehmerrastteil (24) vorgesehen sind.

9. Fahrzeugdach nach Anspruch 8, **dadurch gekennzeichnet,** daß jedes Koppelelement (18) nahe einem der beiden seitlichen Ränder des Verschlußelements (10) in der Nähe des vorderen Endes des Verschlußelements angeordnet ist.

10. Fahrzeugdach nach Anspruch 8 oder 9, **dadurch gekennzeichnet,** daß der elektrische Kontakt jedes Koppelelements (18) durch je eine Kontaktfläche an jedem Mitnehmerbolzen (22) und eine in verrastetem Zustand des Koppelelements damit in Eingriff stehende Kontaktfläche (38) an dem Mitnehmerrastteil (24) gebildet wird.

11. Fahrzeugdach nach Anspruch 10, **dadurch gekennzeichnet,** daß die Kontaktflächen (38) als Bleche ausgebildet sind.

12. Fahrzeugdach nach Anspruch 8 bis 11, **dadurch gekennzeichnet,** daß die Mitnehmerbolzen (22) verschlußelementfest und die Mitnehmerrastteile (24) himmelteilfest ausgebildet sind.

13. Fahrzeugdach nach Anspruch 12, **dadurch gekennzeichnet,** daß jeder Pol des elektrischen Elements (12) des Verschlußelements (10) über ein Kabel (28) mit der Kontaktfläche eines der beiden Mitnehmerbolzen (22) verbunden ist.

14. Fahrzeugdach nach Anspruch 12 oder 13, **dadurch gekennzeichnet,** daß die Kontaktfläche (38) jedes Mitnehmerrastteils (24) über ein Kabel (30) mit je einem himmelteilfesten Schleifkontakt (32) in Verbindung steht, der in elektrischem Kontakt entlang einer dachfesten Schleifschiene (36) verschiebbar ist, die mit je einem Pol des fahrzeugfesten elektrischen Elements in elektrischer Verbindung steht.

15. Fahrzeugdach nach Anspruch 14, **dadurch gekennzeichnet,** daß jeder Schleifkontakt (32) als Federblech ausgebildet ist.
